# EUROPÄISCHE PATENTSCHRIFT

(11) **EP 0 624 133 B1**
(45) Veröffentlichungstag und Bekanntmachung des Hinweises auf die Patenterteilung: **11.10.1995**
(21) Anmeldenummer: 93902076.4
(22) Anmeldetag: 03.02.1993
(51) Int. Cl.: B60S 1/38

(54) **WISCHBLATT ZUM ÜBERSTREICHEN VON SCHEIBEN AN KRAFTFAHRZEUGEN**
BLADE ASSEMBLY FOR WIPING MOTOR VEHICLE WINDSCREENS
ENSEMBLE BALAI D'ESSUIE-GLACE POUR LE NETTOYAGE DES VITRES DE VEHICULES AUTOMOBILES

(30) Priorität: 04.02.1992 DE 9201307 U
(43) Veröffentlichungstag der Anmeldung: 17.11.1994
(73) Patentinhaber: ROBERT BOSCH GMBH, 70442 Stuttgart (DE)
(72) Erfinder: BOLLEN, Lode, B-3588 Hechtel-Eksel (BE); WAGNER, Walter, B-3300 Tienen (BE); NYS, Dirk, B-3390 Tielt-Winge (BE); VANROY, Jan, B-3295 Schaffen (BE)
(86) Internationale Anmeldenummer: DE9300088
(87) Internationale Veröffentlichungsnummer: WO9314958

(56) Entgegenhaltungen:
- GB-A- 2 154 863
- US-A- 3 083 394
- US-A- 3 919 736
- US-A- 4 583 259

## Beschreibung

### Stand der Technik

Die Erfindung geht aus von einem Wischblatt nach der Gattung des Hauptanspruchs. Es ist schon ein Wischblatt (GB-A-21 54 863) bekannt, bei dem während des Einschiebens der Wischleiste in die Krallen des Traggestells ein auf das eine Wischleistenende aufgebrachtes Sicherungselement mit seinen beiden elastisch auslenkbaren Armen über die Krallen des Gestellteils hinweggreift und diese Arme hinter den Krallen zurückfedern, wobei sie mit an ihren freien Enden angeordneten, als Sicherungsmittel wirkenden Rastnocken die Krallen rastend hintergreifen. Da die Arme, welche die gesamte Rastkraft aufbringen müssen, in ihrer Längserstreckung relativ kurz sind, ergibt sich - unter Berücksichtigung der Nocken - ein großer Auslenkwinkel, der nur unter Einhaltung sehr enger Toleranzen, sowohl am Tragbügelgestell bzw. an den Krallen, als auch am Sicherungselement realisierbar ist, weil sonst die Gefahr des Abbrechens der Arme besteht. Auch können sich die Arme aufgrund der in ihnen vorhandenen Fertigungsspannungen spreizen, so daß die Rastung ungenügend wird oder sogar ganz entfällt.

### Vorteile der Erfindung

Das erfindungsgemäße Wischblatt mit den kennzeichnenden Merkmalen des Hauptanspruchs hat demgegenüber den Vorteil, daß das Basisteil selbsthaltend an der Wischleiste angeklemmt werden kann, so daß sich eine vormontierte Einheit bereitgestellt wird, die im Bedarfsfall auf einfache Weise mit dem Traggestell verbunden werden kann. Die nachgiebigen Arme des aus einem relativ weichen Kunststoff hergestellten Sicherungselements ermöglichen eine problemlose Herumführung des Sicherungsmittels auf die Rückseite der Krallen. Es werden dann die beiden Arme mit Hilfe der Sicherungsmittel hinter dem Gestellbügel bzw. hinter den Krallen mit Hilfe der Rast- und Gegenrastmittel direkt miteinander verbunden, so daß sich eine besonders sichere Befestigung der Wischleiste am Traggestell ergibt. Besondere Anleitungen für die Montage und für die Bedienung der Rastmittel sind entbehrlich, weil sich deren Funktion alleine durch Betrachtung erklärt.

Durch die in den Unteransprüchen aufgeführten Maßnahmen sind vorteilhafte Weiterbildungen und Verbesserungen des im Hauptanspruch angegebenen Wischblatts möglich.

### Zeichnung

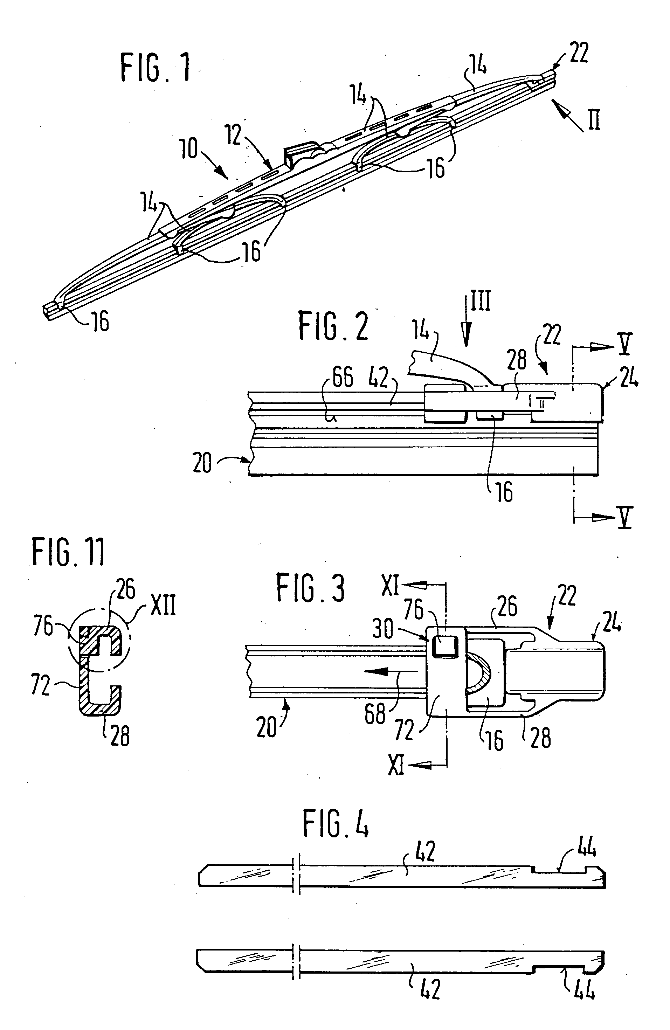

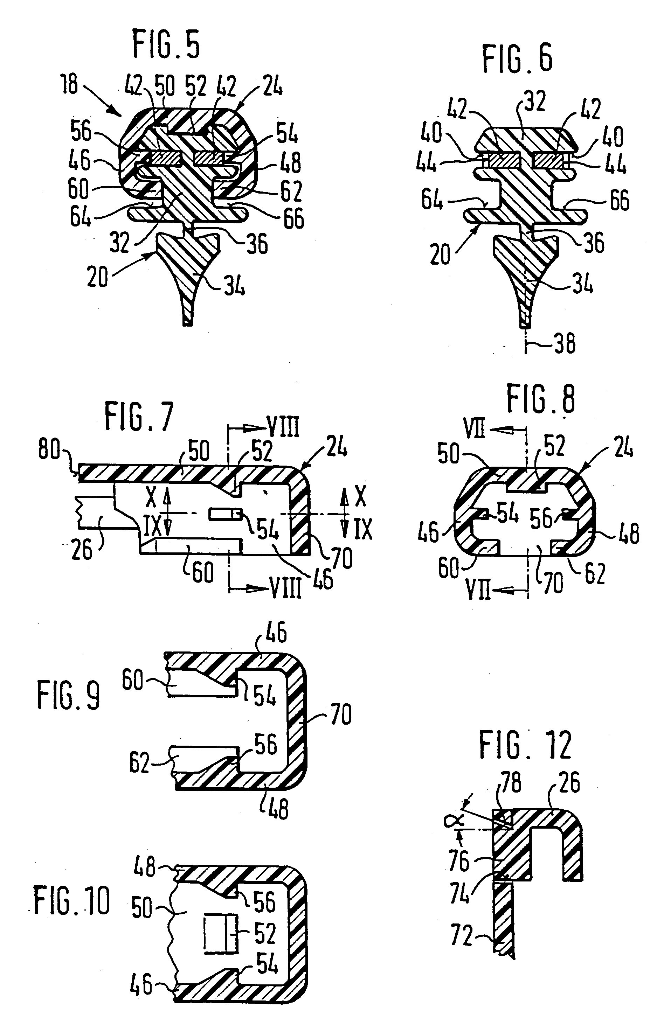

Ein Ausführungsbeispiel der Erfindung ist in der Zeichnung dargestellt und in der nachfolgenden Beschreibung näher erläutert. Es zeigen Figur 1 eine perspektivische Darstellung eines komplett montierten Wischblatts, Figur 2 eine vergrößerte Teilansicht des einen Wischblatt-Endabschnitts, in Richtung des Pfeiles II in Figur 1 gesehen, Figur 3 einen Teilschnitt durch das Wischblatt gemäß Figur 2, entlang der Linie III-III, Figur 4 eine Teilansicht von zwei zum Wischblatt gehörenden Federschienen, Figur 5 einen Querschnitt durch das Wischblatt entlang der Linie V-V in Figur 2, in vergrößerter Darstellung, Figur 6 ein Querschnitt gemäß Figur 5, durch eine zum Wischblatt gehörende Wischleiste, in welche die beiden Federschienen gemäß Figur 4 eingebaut sind, Figur 7 einen Teil-Längsschnitt entlang der Linie VII-VII in Figur 8, durch ein zum Wischblatt gehörendes Sicherungselement, Figur 8 einen Querschnitt durch das Sicherungselement gemäß Figur 7 entlang der Linie VIII-VIII, Figur 9 einen Teilschnitt durch das Sicherungselement gemäß Figur 7, entlang der Linie IX-IX, Figur 10 einen Teilschnitt durch das Sicherungselement gemäß Figur 7 entlang der Linie X-X, Figur 11 einen Schnitt durch die miteinander verrasteten Sicherungsmittel, entlang der Linie XI-XI in Figur 3 und Fig. 12 eine in Figur 11 mit XII bezeichnete Einzelheit, in vergrößerter Darstellung.

### Beschreibung des Ausführungsbeispiels

Für Wischblätter der in Figur 1 dargestellten Art werden derzeit immer häufiger sogenannte Nachfüllsätze angeboten, durch welche die im Laufe des Gebrauchs beschädigten Wischleisten ersetzt werden sollen. Ein Nachfüllsatz umfaßt eine langgestreckte Wischleiste und in der Wischleiste untergebrachte Federschienen, welche als Druckverteilungsmittel dienen und die sich im wesentlichen über die gesamte Länge der Wischleiste erstrecken. Zu einem solchen Nachfüllsatz gehört ferner noch mindestens ein Sicherungselement, durch welches die Wischleiste an einem Tragbügelgestell gesichert wird. Es soll dadurch verhindert werden, daß die von Krallen des Traggestells gehaltene Wischleiste in Längsrichtung aus diesen Haltekrallen herauswandert. Weiter sorgt dieses Sicherungselement häufig auch für eine Arretierung der Federschienen an der Wischleiste. Bekannte Nachfüllsätze sind häufig sehr umständlich zu montieren, was insbesondere von Laien mit Verärgerung festgestellt wird. Dies rührt zum Teil daher, daß so ein Nachfüllsatz aus vier losen Einzelteilen besteht (Wischleiste, zwei Federschienen und ein Sicherungselement), wobei die Funktion des Sicherungselements und die Einbaulage der Federschiene nur durch längeres Herumprobieren oder durch Lesen einer relativ umfangreichen Montageanleitung erkennbar ist.

Ein in Figur 1 dargestelltes Wischblatt 10 hat ein Tragbügelgestell 12, das aus mehreren Gestellteilen 14 aufgebaut ist. Die Gestellteile weisen Haltekrallen 16 auf, durch welche ein sogenannter Nachfüllsatz 18 geführt ist. Der Nachfüllsatz 18 ist genauso wie das Tragbügelgestell 12 von langgestreckter Gestalt. Die Haltekrallen 16 fassen eine zum Nachfüllsatz 18 gehörende Wischleiste 20 an deren Längsseiten. Ein zum Nachfüllsatz gehörendes Sicherungselement 22 sorgt für die Festlegung des Nachfüllsatzes 18 am Tragbügelgestell 12. Das Sicherungselement 22 hat ein Basisteil 24, von welchem aus sich zwei Arme 26 und 28 im wesentlichen parallel zueinander erstrecken. Die Arme 26 und 28 queren bzw. übergreifen die nahe dem einen Ende der Wischleiste 20 befindliche Kralle 16 des Tragbügelgestells 12. An den freien Enden der Arme 26 und 28 sind Sicherungsmittel 30 angeordnet, welche diese Haltekralle 16 bzw. das zur Haltekralle gehörende Gestellteil 14 hintergreifen. Diese Anordnung ist besonders den Figuren 2 und 3 zu entnehmen. Beim Ausführungsbeispiel ist das gesamte Sicherungselement 22 aus einem nachgiebigen Kunststoff hergestellt, d. h. also, daß mit dem Basisteil 24 die Arme 26 und 28 und auch die Sicherungsmittel 30 einstückig verbunden sind.

Wie die Figur 6 verdeutlicht, hat die Wischleiste 20 eine Kopfleiste 32 und eine langgestreckte Wischlippe 34. Kopfleiste und Wischleiste sind über einen langgestreckten Kippsteg 36 miteinander verbunden. Die Wischleiste 20 hat über ihre gesamte Länge den gleichen Querschnitt, so daß sie mit Vorteil extrudiert werden kann, wodurch sich ein kostengünstiger Nachfüllsatz ergibt. Die Wischleiste 20 ist im Querschnitt gemäß Figur 6 symmetrisch aufgebaut. So sind, bezogen auf eine Symmetrieachse 38, aneinander gegenüberliegend in der Kopfleiste 32 zwei Längsnuten 40 angeordnet, welche zur Aufnahme von Federschienen 42 dienen, die für eine gleichmäßige Verteilung des auf das Wischblatt wirkenden Auflagedrucks auf die zu wischende Scheibe sorgen. Diese Federschienen 42 sind in Figur 4 dargestellt. Ihre Anbaulage zeigt Figur 6. Die Federschienen 42 weisen nahe ihrem einen Ende randoffene Aussparungen 44 auf, welche an ihren Außenseiten angeordnet, in Längsrichtung gesehen aneinander gegenüberliegen. Wie insbesondere die Figuren 5 und 8 zeigen, ist das Basisteil 24 des Sicherungselement 22 im Querschnitt im wesentlichen U-förmig ausgebildet. Es hat also zwei U-Schenkel 46 und 48 sowie eine die beiden U-Schenkel verbindende Wand 50. An der Wand 50 ist ein sägezahnartig ausgebildeter, nach innen ragender Klemmansatz 52 so angeordnet, daß sich das Sicherungselement 22 nicht aus seiner noch zu beschreibenden Montageposition lösen kann.

An den beiden U-Schenkel 46 und 48 des Basisteils 24 befinden sich, an den einander zugewandten Seiton der U-Schenkel, sägezahnförmige Haltezähne 54 und 56, welche bei vormontiertem Nachfüllsatz in die Aussparungen 44 der Federschienen 42 greifen (Figur 5). An den freien U-Schenkeln 46, 48 des im Querschnitt U-förmigen Basisteils 24 ist jeweils ein leistenartiger Vorsprung 60, 62 (Figur 8) angeordnet. Die leistenartigen Vorsprünge 60 und 62 sind gegeneinander gerichtet und tauchen bei montiertem Sicherungselement 22 in längsnutenartige Kanäle 64, 66 der Kopfleiste 32 ein (Figur 5). Die Arme 26 und 28 des Sicherungselements 22 erstrecken sich von dessen Basisteil 24 aus in Aufschieberichtung (Pfeil 68, Figur 3) des Sicherungselements 22, wenn dieses auf die Kopfleiste 32 der Wischleiste 20 aufgeschoben wird. Dabei sind die Abmessungen der Kopfleiste bzw. des Basisteils so gewählt, daß das Sicherungselement 22 unter einer gewollten Klemmung aufgeschoben werden kann. Dabei gelangen die Haltezähne 54 und 56 in die Aussparungen 44 der schon eingelegten Federschienen 42. Weiter dringt der Klemmansatz 52 in die Kopfleiste 32 der aus einem gummiähnlichen Material bestehenden Wischleiste 20 ein (Figur 5). Dabei wird das Sicherungselement 22 so weit auf die Kopfleiste 32 aufgeschoben, bis eine die beiden U-Schenkel 46 und 48 des Basisteils 24 verbindende Endwand 70, welche sich an dem von dem Armen abgewandten Ende des Basisteils 24 befindet, an der Kopfleiste 32 anschlägt.

Im folgenden sollen noch die Sicherungsmittel 30 näher beschrieben werden. Zu diesen gehören ein Querlappen 72 am freien Ende des Arms 28, der sich bei montiertem Sicherungselement bis zum anderen Arm 26 erstreckt. Dieser Querlappen 72 weist einen beim Ausführungsbeispiel quadratischen Durchbruch 74 auf. Weiter gehören zu den Sicherungsmitteln ein seitlicher Ansatz 76 an dem anderen Arm 26. Dieser Ansatz 76 ist so ausgebildet und abgestimmt, daß er in den Durchbruch 74 eingeknöpft werden kann. Wie Figur 12 zeigt, hat der Durchbruch 74 an seiner von dem Arm 28 abgewandten Seite einen Wandbereich, der einen als Sicherung wirkenden Hinterschnitt aufweist, der gemäß einem Winkel α ausgebildet ist. Diesem Hinterschnitt (Winkel α) ist der Verlauf des Seitenwangenbereichs 78 des Ansatzes 76 angepaßt. Auf diese Weise wird eine gewisse Sicherheit gegen unbeabsichtigtes Öffnen der Rastverbindung erreicht, welche durch den Durchbruch 74 und den Ansatz 76 der beiden Arme 26 und 28 realisiert ist.

Beim vormontierten Nachfüllsatz hält also das Basisteil 24 des Sicherungselements 22 den vormontierten Nachfüllsatz zusammen, weil das Sicherungselement zumindest über den Klemmansatz 52 an der Kopfleiste der Wischleiste 20 gehalten ist. Die Haltezähne 56 und 54 sichern die Federschienen 42 in deren Aussparungen 44 gegen unbeabsichtigtes Lösen von der Wischleiste 20. Der Benutzer des Nachfüllsatzes muß also lediglich den vormontierten Nachfüllsatz durch die Krallen 16 des Tragbügelgestells 12 hindurchfädeln, bis das Basisteil 24 mit seiner einen Endkante 80 (Fig. 7) an der Kralle des Gestellteiles 14 anschlägt. Danach führt er die Arme 26, 28 außen an der Kralle 16 bzw. am Gestellteil 14 vorbei, bis der Querlappen 72 als Sicherungsmittel die Kralle 16 bzw. das Gestellteil 14 hintergreift (Figuren 2 und 3). Danach erfolgt die Verknöpfung des Ansatzes 76 im Durchbruch 74 des Querlappens 72. Auf diese Weise ist eine ausreichende Sicherung der Wischleiste 20 am Tragbügelgestell 12 gewährleistet.

## Patentansprüche

1. Wischblatt (10) zum Überstreichen von Scheiben an Kraftfahrzeugen mit einer auf der Scheibe aufliegenden, langgestreckten Wischleiste (20) und einem Traggestell (12), welches mit wenigstens zwei an bügelartigen Gestellteilen (14) angeordneten Krallen (16) die Wischleiste (20) an ihren Längsseiten faßt und ein Sicherungselement (22) nahe einem Wischleistenende an diesem festgelegt, mit zwei zueinander etwa parallelen Armen (26, 28), die Krallen (16) quert und hinter den Krallen (16) mit Sicherungsmitteln (30) die Kralle (16) hintergreift, wobei das Sicherungselement (22) ein im Querschnitt U-förmiges Basisteil (24) hat, das unter Klemmung passend auf das Wischleistenende aufschiebbar ist, und wenigstens die Arme (26, 28) des Sicherungselements (22) aus einem nachgiebigen Kunststoff bestehen, dadurch gekennzeichnet, daß der eine Arm (28) an seinem freien Endabschnitt mit Rastmittel (74) aufweisenden Sicherungsmitteln (72) versehen ist, denen Gegenrastmittel (76) des anderen Armes (26) zugeordnet sind, und daß die Sicherungsmittel (20) die nahe dem einen Wischleistenende befindliche Haltekralle (16) bzw. das zur Haltekralle (16) gehörende Gestellteil (14) hintergreifen, wenn die Rastverbindung zwischen den Rast- und Gegenrastmitteln (74, 76) der Arme (28, 26) erfolgt.

2. Wischblatt nach Anspruch 1, bei dem die Wischleiste eine sich über deren gesamte Länge erstreckende Kopfleiste aufweist, die über einen Kippsteg mit einer langgestreckten Wischlippe verbunden ist, und in der, bezogen auf deren Symmetrieachse, einander gegenüberliegend zwei Längsnuten angeordnet sind, in welchen langgestreckte Federschienen liegen, dadurch gekennzeichnet, daß die beiden Federschienen (42) je eine an ihren Außenseiten einander gegenüberliegende, randoffene Aussparungen (44) aufweisen, in die Haltezähne (54, 56) greifen, welche an den einander zugewandten Seiten der U-Schenkel (46, 48) des Sicherungselements (22) angeordnet sind.

3. Wischblatt nach Anspruch 2, dadurch gekennzeichnet, daß an den freien Enden der U-Schenkel (46, 48) angeordnete, gegeneinander gerichtete leistenartige Vorsprünge (60, 62) in längsnutenartige Kanäle (62, 64) der Kopfleiste (32) greifen.

4. Wischblatt nach einem der Ansprüche 1 bis 3, dadurch gekennzeichnet, daß das Basisteil (24) an seiner die beiden U-Schenkel (46, 48) verbindenen Wand (50) einen nach innen ragenden Klemmsatz (52) aufweist.

5. Wischblatt nach einem der Ansprüche 1 bis 4, dadurch gekennzeichnet, daß sich die beiden Arme (26, 28) von dem Basisteil (24) aus in Aufschieberichtung (Pfeil 68) erstrecken und daß an dem von den Armen abgewandten Ende des Basisteils (24) dessen beide U-Schenkel (46, 48) durch eine Endwand (70) verbunden sind.

6. Wischblatt nach einem der Ansprüche 1 bis 5, dadurch gekennzeichnet, daß die Rast- und Gegenrastmittel durch einen, einen Durchbruch (74) aufweisenden Querlappen (72) am Ende des einen Armes (28) und durch einen in den Durchbruch (74) passenden seitlichen Ansatz (76) am anderen Arm (26) gebildet sind.

7. Wischblatt nach Anspruch 6, dadurch gekennzeichnet, daß der Durchbruch (74) an seiner von dem Arm (28) mit dem Querlappen (72) abgewandten Seite einen Wandbereich hat, der einen als Sicherung wirkenden Hinterschnitt (α) aufweist.

8. Wischblatt nach Anspruch 7, dadurch gekennzeichnet, daß der Ansatz (76) einen Seitenwangenbereich (78) aufweist, dessen Verlauf bei miteinander verrasteten Armen (26, 28) dem Verlauf des Hinterschnitts (α) angepaßt ist.

9. Wischblatt nach einem der Ansprüche 1 bis 8, dadurch gekennzeichnet, daß das Basisteil (24) die Arme (26, 28) und die Sicherungsmittel (72, 76) einstückig aus einem nachgiebigen Kunststoff gefertigt sind.

## Claims

1. Wiper blade (10) for wiping motor vehicle windscreens, with an elongate wiper strip (20), which rests on the windscreen, and a supporting frame (12) which grasps the wiper strip (20), on its longitudinal sides, by means of at least two claws (16) arranged on bow-like frame parts (14), and a securing element (22), secured on this wiper strip close to one end thereof, with two arms (26, 28) which are approximately parallel to each other, crosses the claws (16) and behind the claws (16) engages behind the claw (16) with securing means (30), the securing element (22) having a base part (24) which is of U-shaped cross-section and can be pushed with a clamping fit onto the end of the wiper strip, and at least the arms (26, 28) of the securing element (22) consist of a flexible plastic, characterized in that one arm (28) is provided, on its free end portion, with securing means (72) which have latching means (74) and which are associated with counter-latching means (76) of the other arm (26), and in that the securing means (30) engage behind that holding claw (16) which is situated close to one end of the wiper strip, or behind that frame part (14) which belongs to the holding claw (16), when the latching connection between the latching and counterlatching means (74, 76) of the arms (28, 26) takes place.

2. Wiper blade according to Claim 1, in which the wiper strip has a head strip which extends over its entire length, is connected, via a tilting web, to an elongate wiper lip and in which, relative to its axis of symmetry, there are arranged two longitudinal grooves which lie opposite one another and in which elongate spring rails are located, characterized in that the two spring rails (42) each have a recess (44), which recesses lie opposite one another on the outsides of said spring rails, are open on the edge and in which holding teeth (54, 56), which are arranged on the mutually facing sides of the U-limbs (46, 48) of the securing element (22), engage.

3. Wiper blade according to Claim 2, characterized in that strip-like projections (60, 62) which are arranged on the free ends of the U-limbs (46, 48) and are directed towards one another, engage in longitudinal groove-like channels (64, 66) of the head strip (32).

4. Wiper blade according to one of Claims 1 to 3, characterized in that on its wall (50) which connects the two U-limbs (46, 48), the base part (24) has an inwardly projecting clamping extension (52).

5. Wiper blade according to one of Claims 1 to 4, characterized in that the two arms (26, 28) extend away from the base part (24) in the push-on direction (arrow 68), and in that at that end of the base part (24) which is remote from the arms the two U-limbs (46, 48) thereof are connected by an end wall (70).

6. Wiper blade according to one of Claims 1 to 5, characterized in that the latching means and counterlatching means are formed by a transverse tongue (72) at the end of one arm (28), which tongue has an opening (74), and by a lateral extension (76) on the other arm (26), which extension fits into the opening (74).

7. Wiper blade according to Claim 6, characterized in that on its side which is remote from the arm (28) with the transverse tongue (72), the opening (74) has a wall region which has an undercut (α) acting as securing means.

8. Wiper blade according to Claim 7, characterized in that the extension (76) has a side cheek region (78), the profile of which, with the arms (26, 28) latched together, is matched to the profile of the undercut (α).

9. Wiper blade according to one of Claims 1 to 8, characterized in that the base part (24), the arms (26, 28) and the securing means (72, 76) are manufactured in one piece from flexible plastic.

## Revendications

1. Balai d'essuie-glace pour l'essuyage de vitres de véhicules automobiles comprenant une raclette allongée reposant sur la vitre, un palonnier (12) qui vient prendre la raclette (20) sur ses surfaces latérales allongées au moyen d'au moins deux griffes (16) prévues sur les pièces de palonnier (14) et un élément de blocage (22) fixé au palonnier, à proximité de l'une des extrémités de la raclette avec deux bras sensiblement parallèles (26, 28), en venant en prise transversalement aux griffes (16) et derrière celles-ci (16) avec des moyens de blocage (30), l'élément de blocage (22) ayant une pièce de base (24) de section en U pouvant être emmanchée sur la raclette, de façon adaptée avec serrage et au moins les bras (26, 28) de l'élément de blocage (22) sont réalisés en une matière synthétique souple, caractérisé en ce qu'un bras (28) est muni d'éléments de blocage (72) comportant des moyens d'encliquetage (74), à son extrémité libre, dont les moyens de contre-encliquetage (76) sont disposés sur l'autre bras (26), et en ce que les moyens de blocage (20) viennent en prise derrière les griffes de maintien à proximité de l'une des extrémités de la raclette ou derrière la pièce de palonnier (14) correspondant aux griffes (16) lorsque la liaison d'encliquetage est réalisée entre les moyens d'encliquetage et de contre-encliquetage (74, 76) des bras (28, 26).

2. Balai d'essuie-glace selon la revendication 1 dont la raclette présente une bande supérieure s'étendant sur toute sa longueur, reliée à la lèvre d'essuyage allongée, au moyen d'une bande d'articulation et qui comporte deux rainures longitudinales opposées dans lesquelles reposent deux raidisseurs s'étendant longitudinalement, caractérisé en ce que les deux raidisseurs (42) présentent des découpes (44) ouvertes vers l'extérieur, sur leur côté extérieur respectif, découpes dans lesquelles viennent se loger les dents de maintien (54, 56) des côtés opposés des branches en U (46, 48) de l'élément de blocage (22) .

3. Balai d'essuie-glace selon la revendication 2, caractérisé en ce que des saillies en forme de baguettes (60, 62) aux extrémités libres des branches en U (46, 48) viennent en prise dans des canaux longitudinaux (62, 64) de la bande supérieure (32).

4. Balai d'essuie-glace selon la revendication 1 à 3, caractérisé en ce que la pièce de base (24) présente sur ses deux branches en U, une pièce de blocage (52) dirigée vers la paroi (50) reliant ces deux branches.

5. Balai d'essuie-glace selon la revendication 1 à 4, caractérisé en ce que les deux bras (26, 28) s'étendent à partir de la pièce de base (24) dans la direction d'emmanchement (flèche 68) et sur l'extrémité de la pièce de base (24) opposée aux bras, ces deux branches en U (46, 48) sont reliées par une paroi d'extrémité (70).

6. Balai d'essuie-glace selon la revendication 1 à 5, caractérisé en ce que les moyens d'encliquetage et de contre-encliquetage sont réalisés par une patte transversale (72) présentant un passage (74) à l'extrémité d'un des bras (28) et par un ergot latéral (76) passant par le passage (74) de l'autre bras (26).

7. Balai d'essuie-glace selon la revendication 6, caractérisé en ce que le passage (74) présente une zone de paroi sur sa face opposée à la patte latérale du bras (28), qui est en contre dépouille (α) agissant comme moyen de blocage.

8. Balai d'essuie-glace selon la revendication 7, caractérisé en ce que le bossage (76) présente une zone de paroi latérale (78) dont la direction, lorsque les deux bras (26 et 28) sont encliquetés, correspond à la contre dépouille (α).

9. Balai d'essuie-glace selon les revendications 1 à 8, caractérisé en ce que la pièce de base (24), les bras (26, 28) et les moyens de sécurité (72, 76) sont réalisés d'une seule pièce en une matière synthétique souple.
